# EUROPÄISCHE PATENTSCHRIFT

(11) **EP 4 222 541 B1**
(45) Veröffentlichungstag und Bekanntmachung des Hinweises auf die Patenterteilung: **21.10.2026**
(21) Anmeldenummer: 21782734.4
(22) Anmeldetag: 23.09.2021
(51) Int. Cl.: G02B 5/28

(54) **INTERFERENZFILTER UND VERWENDUNG EINER STAPELANORDNUNG VON SCHICHTSTRUKTUREN ALS INTERFERENZFILTER**
INTERFERENCE FILTER AND USE OF A STACK ARRANGEMENT OF LAYER STRUCTURES AS INTERFERENCE FILTER
FILTRE D'INTERFÉRENCE ET UTILISATION D'UN AGENCEMENT D'EMPILEMENT DE STRUCTURES DE COUCHE EN TANT QUE FILTRE D'INTERFÉRENCE

(30) Priorität: 30.09.2020 DE 102020125597
(43) Veröffentlichungstag der Anmeldung: 09.08.2023
(73) Patentinhaber: Universität zu Köln, 50931 Köln (DE)
(72) Erfinder: GATHER, Malte C., Fife KY16 9RG (GB); MISCHOK, Andreas, Fife KY16 8BH (GB)
(74) Vertreter: Michalski Hüttermann & Partner mbB
(86) Internationale Anmeldenummer: PCT/EP2021/076247
(87) Internationale Veröffentlichungsnummer: WO 2022/069345

(56) Entgegenhaltungen:
- CHEN JUN-RONG ET AL: "Large vacuum Rabi splitting in ZnO-based hybrid microcavities observed at room temperature", APPLIED PHYSICS LETTERS, AMERICAN INSTITUTE OF PHYSICS, 2 HUNTINGTON QUADRANGLE, MELVILLE, NY 11747, vol. 94, no. 6, 9 February 2009 (2009-02-09), pages 61103 - 61103, XP012118929, ISSN: 0003-6951, DOI: 10.1063/1.3079398
- TAKADA NORIYUKI ET AL: "Polariton emission from polysilane-based organic microcavities", APPLIED PHYSICS LETTERS, AMERICAN INSTITUTE OF PHYSICS, 2 HUNTINGTON QUADRANGLE, MELVILLE, NY 11747, vol. 82, no. 12, 24 March 2003 (2003-03-24), pages 1812 - 1814, XP012033557, ISSN: 0003-6951, DOI: 10.1063/1.1559950

## Beschreibung

Die Erfindung betrifft ein Interferenzfilter zur wellenlängenselektiven Filterung von Licht, mit einer Stapelanordnung von Schichtstrukturen, die zwei teildurchlässige Spiegelschichtstrukturen und eine zwischen den beiden teildurchlässigen Spiegelschichtstrukturen angeordnete Zwischenschichtstruktur aufweist, wobei die beiden teildurchlässigen Spiegelschichtstrukturen einen optischen Resonator mit einer charakteristischen Resonatorwellenlänge λ_{R} bilden.

Die Erfindung betrifft weiterhin die Verwendung einer Stapelanordnung von Schichtstrukturen als Interferenzfilter, wobei die Stapelanordnung von Schichtstrukturen zwei teildurchlässige Spiegelschichtstrukturen und eine zwischen den beiden teildurchlässigen Spiegelschichtstrukturen angeordnete Zwischenschichtstruktur aufweist, wobei die beiden teildurchlässigen Spiegelschichtstrukturen einen optischen Resonator mit einer charakteristischen Resonatorwellenlänge λ_{R} bilden.

Die einzelne Schichtstruktur einer derartigen Stapelanordnung kann dabei von einer Einzelschicht bzw. einlagigen Schichtstruktur oder von einer mehrlagigen Schichtstruktur gebildet sein. Neben der den Resonator bildenden Anordnung aus erster Spiegelschichtstruktur - Zwischenschichtstruktur - zweiter Spiegelschichtstruktur kann die Stapelanordnung auch weitere Schichtstrukturen aufweisen.

Der Begriff "Licht" soll im Zusammenhang mit der Erfindung nicht streng auf den sichtbaren Spektralbereich (VIS) beschränkt sein, sondern sich - wie im Sprachgebrauch durchaus üblich (z.B. bei Begriffen wie IR-Licht, UV-Licht) - auf die angrenzenden Spektralbereiche wie Infrarot (IR), Ultraviolett (UV) und Terahertz (THz) erstrecken.

Ein einfaches Beispiel für ein Interferenzfilter der eingangs genannten Art ist ein dielektrisches Bandpassfilter, basierend auf der Transmission von Licht durch eine optische Kavität vom Fabry-Perot-Typ, wobei zwei Spiegelschichtstrukturen eine dielektrische Zwischenschichtstruktur mit genau kontrollierter Dicke d zwischen sich einschließen. Die Transmissionswellenlänge wird dann durch die konstruktive Interferenz in der Zwischenschichtstruktur bestimmt und ein definiertes Transmissionsband entsteht, wenn die Dicke d ein ganzzahliges Vielfaches i von etwa der Hälfte einer gewünschten Resonatorwellenlänge λ_{R} ist: $d \approx i ∗ \frac{{λ}_{R}}{2 n}$ (1),
wobei n der Brechungsindex der dielektrischen Zwischenschichtstruktur in der Kavität ist. Ein solches Interferenzfilter weist wie alle herkömmlichen interferenzbasierten Filter von Natur aus eine starke Winkeldispersion auf, d.h. eine Blauverschiebung der durchgelassenen Wellenlänge beim Kippen des Filters um einen Winkel θ. Für einen Hohlraum vom Fabry-Perot-Typ kann die Dispersion angenähert werden als $λ = {λ}_{0} ∗ {\sqrt{1 - \left(\frac{sin θ}{n}\right)}}^{2}$ (2),
wobei λ₀ die transmittierte Wellenlänge bei θ = 0° Einfallswinkel ist. Dieser Effekt kann zur Abstimmung der gewünschten Übertragungswellenlänge genutzt werden, aber in der Praxis ist dieses Verhalten aus verschiedenen Gründen oft unerwünscht. Das Vorhandensein einer Winkeldispersion erfordert eine präzise Ausrichtung des Filters und macht optische Systeme, die solche Filter verwenden, anfällig für eine zeitliche Drift. Wenn das durch den Filter hindurchtretende Licht eine Verteilung von Winkelkomponenten aufweist (wie es bei den meisten Lichtquellen der Fall ist), wird außerdem die Wellenlängenselektivität des Filters beeinträchtigt, und statt eine schmale Spektrallinie zu erzeugen, wird das durchgelassene Licht auf unkontrollierte Weise spektral verbreitert. Die durchgelassene Linienform ist bei großen Winkeln oft stark verzerrt, d.h. sie verbreitert sich erheblich und kann je nach Polarisation des einfallenden Lichts ein unterschiedliches Verhalten zeigen (Polarisationsspaltung).

Das Dokument EP 2 260 337 A1 beschreibt ein derartiges Interferenzfilter zur wellenlängenselektiven Filterung von Licht, mit einer Stapelanordnung von dielektrischen und metallischen Schichtstrukturen, die unter anderem zwei teildurchlässige Spiegelschichtstrukturen und eine zwischen den beiden teildurchlässigen Spiegelschichtstrukturen angeordnete dielektrische Zwischenschichtstruktur aufweist, wobei die beiden teildurchlässigen Spiegelschichtstrukturen einen optischen Resonator mit einer charakteristischen Resonatorwellenlänge λ_{R} bilden. Die Spiegelschichtstrukturen werden insbesondere von Silberschichten gebildet, die dielektrische Zwischenschichtstruktur von ein- oder mehrlagigen Oxidschichten. Weiterhin weist das Interferenzfilter ein transparentes Substrat auf, auf dem der Schichtstapel angeordnet ist.

Die Druckschrift CN 108 445 570 A beschreibt einen Wellenlängenselektor, der auf einer starken Kopplung von Oberflächenplasmonen mit einem optischen Resonator basiert.

Die Druckschrift "Large vacuum Rabi splitting in ZnO-based hybrid microcavities observed at room temperature" in Applied Physics Letters 94, 061103 (2009), DOI: 10.1063/1.3079398 beschreibt, dass das Phänomen der starken Exzitonen-Photonen-Kopplung bei Raumtemperatur in einer Hybrid-Mikrokavitätsstruktur auf ZnO-Basis beobachtet wurde. Die Hybrid-Mikrokavitätsstruktur besteht aus 30 epitaktisch gewachsenen AlN/AlGaN-verteilten Bragg-Reflektorpaaren (DBR) auf der Unterseite der 3/2λ dicken ZnO Kavität und 9 Paar SiO2/HfO2 DBR als oberer Spiegel.

Die Druckschrift "Polariton emission from polysilane-based organic microcavities" in Applied Physics Letters 82, 1812-1814 (2003), DOI: 10.1063/1.1559950 berichtet über die Beobachtung einer starken Kopplung zwischen Exzitonen- und Photonenmoden in einer konjugierten Halbleiter-Mikrokavität auf Polymerbasis. Zur Bildung der Mikrokavitätsstruktur wurden dünne Filme aus σ-konjugiertem Poly[bis(p-butylphenyl)silan] (PBPS) zwischen metallenen und dielektrischen Spiegeln eingefügt.

Es ist die Aufgabe der Erfindung Maßnahmen bereitzustellen um ein Interferenzfilter mit wohldefiniertem Filterverhalten zu schaffen, bei dem bevorzugt auch die vorstehend beschriebene Winkeldispersions-Problematik reduziert ist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei dem erfindungsgemäßen Interferenzfilter zur wellenlängenselektiven Filterung von Licht, mit einer Stapelanordnung von Schichtstrukturen, die zwei teildurchlässige Spiegelschichtstrukturen und eine zwischen den beiden teildurchlässigen Spiegelschichtstrukturen angeordnete Zwischenschichtstruktur aufweist, wobei die beiden teildurchlässigen Spiegelschichtstrukturen und die Zwischenschichtstruktur einen optischen Resonator mit einer charakteristischen Resonatorwellenlänge λ_{R} bilden, ist vorgesehen, dass das Material der Zwischenschichtstruktur eine derartige exzitonische Materialresonanz bei einer Absorptionswellenlänge λ_{A} aufweist, dass bei Bestrahlung des Interferenzfilters mit Licht der wellenlängenabhängige Transmissionsgrad T(λ) der Stapelanordnung in einem die Absorptionswellenlänge λ_{A} umgebenden Wellenlängenbereich von einer starken Kopplung der im Resonator befindlichen Photonen des Lichts mit Exzitonen dieser Materialresonanz bestimmt wird, wobei ein Abstand der Spiegelschichtstrukturen zueinander und ein Brechungsindex der Zwischenschichtstruktur derart ausgeführt ist, dass die daraus resultierende Resonatorwellenlänge λ_{R} in Bezug auf die Absorptionswellenlänge λ_{A} derart ist, dass sich bei Bestrahlung des Interferenzfilters mit Licht zwei voneinander energetisch beabstandete Transmissionsmoden ergeben, wobei zumindest eine der Transmissionsmoden einen vom Lichteinfallswinkels θ abhängigen Verlauf zeigt, in der Form, dass bei Änderung des Lichteinfallswinkels θ vom Lotrechten Lichteinfall θ = 0° weg, eine Änderung der Transmissionswellenlänge λ_{T} zu niedrigeren Wellenlängen hin erfolgt, und die Änderung der Transmissionswellenlänge λ_{T} bezogen auf den Wert bei lotrechten Lichteinfall θ = 0° bei einem Lichteinfallswinkel von θ = 45° weniger als 2% und bei einem Lichteinfallswinkel von θ = 80° weniger als 5% beträgt, der Interferenzfilter einen Transmissionsgrad T(λ) von mindestens 0,05 bei zumindest einer der Transmissionswellenlängen λ_{T} der Transmissionsmoden bei lotrechtem Lichteinfall aufweist.

Aus dieser starken Kopplung von Photonen des Lichts mit der Materialresonanz resultiert ein in der Physik als Polariton bekanntes Quasiteilchen. Daher könnte man dieses Interferenzfilter auch als "optisches Polariton-Filter" bezeichnen. Ein derartiges "optisches Polariton-Filter" kann relativ scharfkantig energieselektiv filtern, was für eine große Zahl von Anwendungen von Vorteil ist.

Eine der Stapelanordnung von Schichtstrukturen recht ähnliche Anordnung mit einem zwei parallel ausgerichtete Spiegel umfassenden Resonator und einem in dem Resonator befindlichen Material, welches eine derartige Materialresonanz bei einer Absorptionswellenlänge λ_{A} aufweist, dass der wellenlängenabhängige Transmissionsgrad T(λ) der Stapelanordnung in einem die Absorptionswellenlänge λ_{A} umgebenden Wellenlängenbereich von einer starken Kopplung der in der Kavität befindlichen Photonen des Lichts mit dieser Materialresonanz bestimmt wird, ist aus dem Artikel »Thomas W. Ebbesen:" Hybrid Light-Matter States in a Molecular and Material Science Perspective" Acc. Chem. Res. 2016, 49, 2403-2412« (kurz: Ebbesen-Artikel) bekannt. Zwar werden in dem Artikel Transmissionseigenschaften der Anordnung beschrieben, aber die Möglichkeit einer Verwendung dieser Anordnung als Interferenzfilter wird in dem Artikel weder erwähnt noch auf irgendeine Art angedeutet.

Gemäß einer bevorzugten Ausführungsform der Erfindung ist die Resonatorwellenlänge λ_{R} bei senkrechten Lichteinfall höchstens so groß, wie die Absorptionswellenlänge λ_{A}. Es gilt also λ_{R} ≤ λ_{A}. Eine derartige Abstimmung der Resonatorwellenlänge λ_{R} mit der Absorptionswellenlänge λ_{A} ist bei dem Ebbesen-Artikel nicht beschrieben.

Gemäß der Erfindung ist die Resonatorwellenlänge λ_{R} in Bezug auf die Absorptionswellenlänge λ_{A} derart gewählt, dass sich zwei voneinander energetisch beabstandete Transmissionsmoden mit entsprechenden Bandstrukturen ergeben.

Dabei ist vorgesehen, dass sich entsprechend des Verlaufs der Bandstrukturen für zumindest einen dieser Transmissionsmoden in Abhängigkeit des Lichteinfallswinkels θ gegenüber dem lotrechten Lichteinfall θ = 0° eine Änderung der Transmissionswellenlänge zu niedrigeren Wellenlängen hin erfolgt, wobei die Änderung der Transmissionswellenlänge bezogen auf den Wert bei lotrechten Lichteinfall θ = 0° bei einem Lichteinfallswinkel θ = 45° weniger als 2% beträgt und bei einem Lichteinfallswinkel θ = 80° weniger als 5%. Mit anderen Worten ist der Verlauf der Bandstrukturen verglichen mit denen eines als dielektrisches Filter ausgestalteten Interferenzfilters weit weniger gekrümmt, also deutlich flacher. Dementsprechend ist die auftretende Winkeldispersion deutlich kleiner. Für alle Anwendungen, bei der eine derartige Winkeldispersion unerwünscht ist, weist ein entsprechend ausgestaltetes "optisches Polariton-Filter" also deutliche Vorteile auf.

Bezüglich der zwei voneinander energetisch beabstandeten Transmissionsmoden mit den entsprechenden Bandstrukturen ist weiterhin bevorzugt vorgesehen, dass sich durch die starke Kopplung der im Resonator befindlichen Photonen des Lichts mit der Materialresonanz eine Rabi-Splitting genannte energetische Aufspaltung ergibt, deren Größe ΔE den kleineren Wert der beiden im folgenden genannten Werte übertrifft:
(a) 5% der Energie der koppelnden Materialresonanz E_{M} oder
(b) den festen Grenzwert E_{G} = 100 meV.

Bezüglich der Transmissionsmoden ist bevorzugt vorgesehen, dass zumindest eine dieser Transmissionsmoden einen Qualitätsfaktor Q = E_{T}/ΔE ≈ λ_{T}/Δλ > 8 aufweist. Ein Qualitätsfaktor Q größer 8 hat sich in der Praxis als vorteilhaft herausgestellt.

Gemäß einer weiteren bevorzugten Ausführungsform der Erfindung weist jede der beiden teildurchlässigen Spiegelschichtstrukturen bei einem die Resonatorwellenlänge λ_{R}, die Absorptionswellenlänge λ_{A} und eine Transmissionswellenlänge λ_{T} des Filters umfassenden relevanten Wellenlängenbereich Δλᵣₑₗ eine Reflektivität von mindestens 20% auf. Ein Resonator mit derartigen teildurchlässigen Spiegelschichtstrukturen ist hocheffektiv. Gemäß der Erfindung weist das Interferenzfilter beziehungsweise dessen Stapelanordnung einen Transmissionsgrad T(λ) von mindestens 0,05 bei zumindest einer der Transmissionswellenlängen λ_{T} bei lotrechtem Lichteinfall auf.

Gemäß einer bevorzugten Ausgestaltung der Erfindung beträgt die Absorption des Materials der Zwischenschichtstruktur bei einer der Anregungswellenlänge λ_{A} entsprechenden relevanten Kopplungswellenlänge mindestens 10%.

Gemäß noch einer bevorzugten Ausgestaltung der Erfindung ist das Material der Zwischenschichtstruktur ein organisches Material. Für die Zwischenschichtstruktur sind organische Materialien sehr nützlich, da sie eine durchstimmbare und starke exzitonische Absorption aufweisen, leicht und kostengünstig zu verarbeiten sind und auch mechanische Flexibilität zeigen.

Weiterhin ist mit Vorteil vorgesehen, dass der Interferenzfilter ein Interferenzfilter zur Filterung von Licht aus mindestens einem der folgenden Spektralbereiche ist:
- UV-Bereich (etwa 200 - 380 nm),
- VIS-Bereich (etwa 380 - 780 nm),
- NIR-Bereich (etwa 780 - 3 µm),
- IR-Bereich (etwa 3µm - 1mm) und
- THz-Bereich (etwa 30 µm - 3 mm).

Bei der erfindungsgemäßen Verwendung einer Stapelanordnung von Schichtstrukturen als Interferenzfilter, wobei die Stapelanordnung von Schichtstrukturen zwei teildurchlässige Spiegelschichtstrukturen und eine zwischen den beiden teildurchlässigen Spiegelschichtstrukturen angeordnete Zwischenschichtstruktur aufweist, wobei die beiden teildurchlässigen Spiegelschichtstrukturen einen optischen Resonator mit einer charakteristischen Resonatorwellenlänge λ_{R} bilden, ist vorgesehen, dass das Material der Zwischenschichtstruktur eine derartige exzitonische Materialresonanz bei einer Absorptionswellenlänge λ_{A} aufweist, dass der wellenlängenabhängige Transmissionsgrad T(λ) der Stapelanordnung in einem die Absorptionswellenlänge λ_{A} umgebenden Wellenlängenbereich von einer starken Kopplung der im Resonator befindlichen Photonen des Lichts mit Exzitonen dieser Materialresonanz bestimmt wird.

Wie bereits im Zusammenhang mit dem erfindungsgemäßen Interferenzfilter erwähnt, ist eine recht ähnliche Anordnung mit einem zwei parallel ausgerichtete Spiegel umfassenden Resonator und einem in dem Resonator befindlichen Material, welches eine entsprechende Materialresonanz für eine starke Kopplung der in der Kavität befindlichen Photonen des Lichts mit dieser Materialresonanz aufweist, aus dem Ebbesen-Artikel bekannt. Zwar werden in dem Artikel Transmissionseigenschaften der Anordnung beschrieben, aber die Möglichkeit einer Verwendung dieser Anordnung als Interferenzfilter wird in dem Artikel weder erwähnt noch auf irgendeine Art angedeutet.

Die im Zusammenhang mit den vorteilhaften Ausgestaltungen des erfindungsgemäßen Interferenzfilters erwähnten Ausführungsformen der Stapelanordnung sind entsprechend auch im Zusammengang mit der Verwendung einer derartigen Stapelanordnung als Interferenzfilter von Vorteil.

Nachfolgend wird die Erfindung unter Bezugnahme auf die anliegenden Zeichnungen anhand von bevorzugten Ausführungsbeispielen exemplarisch erläutert. Es zeigen:
Fig. 1 ein Interferenzfilter zur wellenlängenselektiven Filterung von Licht gemäß einer ersten bevorzugten Ausführungsform der Erfindung,
Fig. 2 eine Gegenüberstellung zweier Interferenzfilter, von denen das eine als dielektrisches Filter und das andere als Interferenzfilter gemäß einer bevorzugten Ausgestaltung der Erfindung ausgebildet ist.
Fig. 3 eine Serie von sich ergebenden Bandstrukturen bei einem bloßen Resonator und als Polaritonfilter ausgebildeten Interferenzfiltern mit unterschiedlich ausgebildeten Moden,
Fig. 4 zeigt gemessene winkelaufgelöste Transmissionsplots der Interferenzfilter gemäß einer bevorzugten Ausgestaltung der Erfindung und
Fig. 5 zeigt mehrere Varianten des vorgeschlagenen Interferenzfilters, insbesondere Kombinationen von Polariton- und konventionellen Filtern.

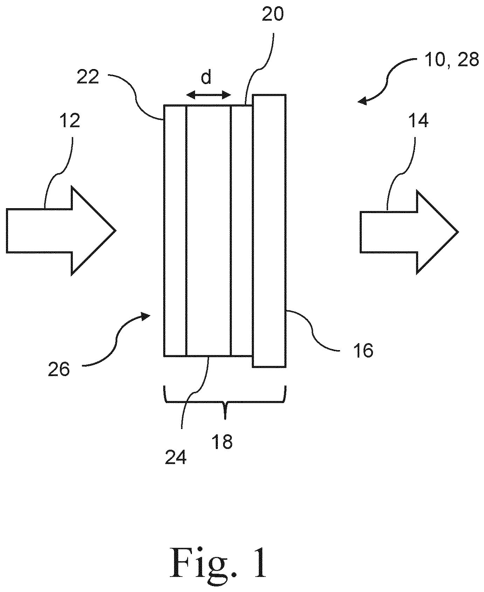

Die Fig. 1 zeigt in schematischer Darstellung ein Interferenzfilter 10 zur wellenlängenselektiven Filterung von Licht zusammen mit einfallendem Licht (Pfeil 12) und transmittiertem, energieselektiv gefiltertem Licht (Pfeil 14).

Das Interferenzfilter 10 umfasst ein transparentes Substrat 16 und eine Stapelanordnung 18 von (hier im Beispiel der Fig. 1 drei) Schichtstrukturen 20, 22, 24. Die Schichtstrukturen 20, 22, 24 umfassen dabei zwei teildurchlässige Spiegelschichtstrukturen 20, 22 und eine zwischen den beiden teildurchlässigen Spiegelschichtstrukturen 20, 22 angeordnete Zwischenschichtstruktur 24 aus einem Material, welches eine Materialresonanz bei einer Absorptionswellenlänge λ_{A} aufweist. Die beiden teildurchlässigen Spiegelschichtstrukturen 20, 22 haben einen wohldefinierten Abstand d und bilden einen optischen Resonator 26 mit einer charakteristischen Resonatorwellenlänge λ_{R}. Das Material der Zwischenschichtstruktur 24 weist dabei eine derartige Materialresonanz bei der Absorptionswellenlänge λ_{A} auf, dass der wellenlängenabhängige Transmissionsgrad T(λ) der Stapelanordnung 18 in einem die Absorptionswellenlänge λ_{A} umgebenden Wellenlängenbereich von einer starken Kopplung der im Resonator 26 befindlichen Photonen des Lichts mit dieser Materialresonanz bestimmt wird. Ein derartiges Interferenzfilter 10 könnte man auch als Polaritonfilter 28 bezeichnen. Unter einem Polariton versteht man in der Physik das Quasiteilchen der starken Kopplung bzw. starken Wechselwirkung von Photonen mit einer derartigen Materialresonanz.

In der in Fig. 1 gezeigten Implementierung besteht das als Polaritonfilter 28 ausgebildete Interferenzfilter 10 aus zwei metallischen Spiegelschichtstrukturen 20, 22 (wie dünne Metallfilme, Alternativen: dielektrische Spiegel, Subwellenlängengitter,...), zwischen denen eine starke Kopplungsschicht mit einer starken Materialresonanz als Zwischenschichtstruktur 24 liegt. Weitere Arten von als Resonator 26 dienenden Kavitäten mit gut kontrollierten Resonanzen, z.B. unter Verwendung von verteilter Rückkopplung, photonischen Kristallen, Flüstergalerie-Modi oder anderen, können ebenfalls angewendet werden. Für die als starke Kopplungsschicht fungierende Zwischenschichtstruktur 24 sind organische Materialien sehr nützlich, da sie eine durchstimmbare und starke exzitonische Absorption aufweisen, leicht und kostengünstig zu verarbeiten sind und auch mechanische Flexibilität zeigen. Weitere mögliche Materialien sind unter Anderem II-VI-Halbleiter und III-V-Halbleiter wie ZnS und GaAs, hybride organisch-anorganische oder rein anorganische Perowskite, 2D-Materialien, wie Graphen, 2D-Übergangsmetall-Dichalcogenide, oder andere Nanomaterialien, wie beispielsweise Kohlenstoff-Nanoröhren oder Quantenpunkte.

Im Folgenden soll das Funktionsprinzip des als Polaritonfilter 28 ausgebildeten Interferenzfilters 10 anhand einer Stapelanordnung 18 aus metallischer Spiegelschichtstruktur 20 - organischer Zwischenschichtstruktur 24 - metallischer Spiegelschichtstruktur 22, die einen vergleichbaren Transmissionsgrad T(λ), aber eine verbesserte Linienbreite bei 0° verglichen mit einer Stapelanordnung 18 eines konventionellen dielektrischen Filters aufweist, aber vor allem bezüglich der Winkeldispersion eine drastisch verbesserte Winkelstabilität besitzt. Das neuartige Interferenzfilter 10 weist bei einer Neigung von 0° bis 89° eine Blauverschiebung von weniger als 5nm auf, während das konventionelle Design eine Verschiebung von 50nm - 100nm zeigt (abhängig von der Polarisation des einfallenden Lichts).

Um zu demonstrieren, dass das Konzept des neuartigen Filters 10, 28 universell ist, werden im Folgenden zwei Filter 10, 28 präsentiert, die jeweils bei unterschiedlichen Wellenlängen arbeiten, wozu bei der Zwischenschichtstruktur 24 verschiedene organische Materialien verwendet werden. Schließlich werden mögliche Variationen und Upgrades des Interferenzfilters 10 in Kombination mit anderen Filtertypen vorgestellt.

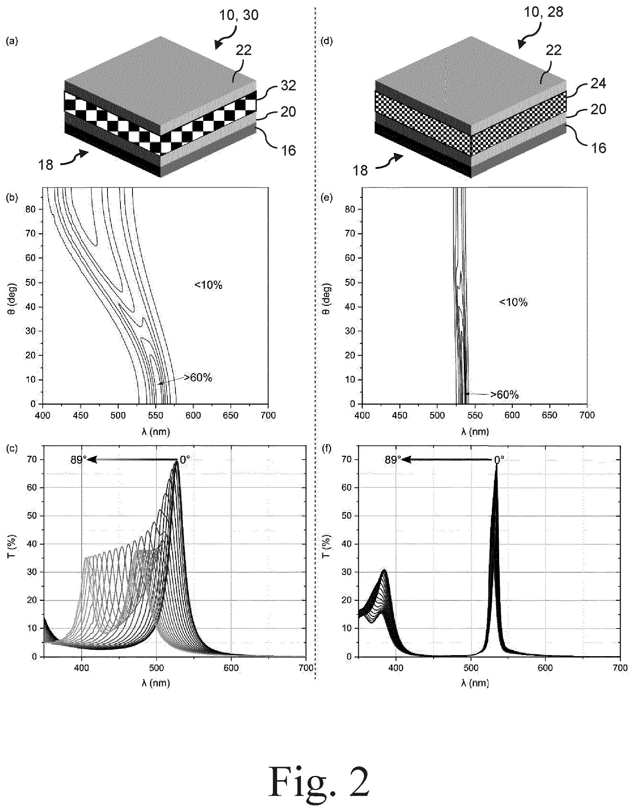

Die Fig. 2 zeigt eine Gegenüberstellung zweier Interferenzfilter 10, von denen das eine als dielektrisches Filter 30 (links), das nicht unter den Schutzumfang der Ansprüche fällt, und das andere als Polaritonfilter 28 (rechts) ausgebildet ist.

Neben dem jeweiligen Aufbau der beiden Interferenzfilter 10 (oben) ist weiterhin die Winkeldispersion der beiden Interferenzfilter 10 in einer jeweiligen Grafik (Mitte) dargestellt, bei der der Winkel θ über der Wellenlänge der transmittierten (gefilterten) Wellenlänge λ aufgetragen ist sowie eine jeweilige Grafik (unten), bei der der Transmissionsgrad in Abhängigkeit vom Winkel θ über der Wellenlänge λ aufgetragen ist.

Zunächst soll auf das dielektrische Filter 30 (Fig. 2 links - (a) - (c)) eingegangen werden: Die meisten herkömmlichen Schmalbandfilter basieren auf dielektrischer Interferenz, da dies das effizienteste und flexibelste Design ist. Wie in der Beschreibungseinleitung erläutert, zeigt dieses Design von Natur aus eine starke Winkelabhängigkeit, vergleiche Gleichung (2). Dies ist ein grundlegendes physikalisches Prinzip und kann nicht durch eine Änderung des Resonator- oder Hohlraumdesigns überwunden werden. In der Praxis beschränkt dies den gesamten Betrieb solcher Filter 30 auf normal- oder festwinklig einfallende und kollimierte Lichtstrahlen. Anwendungen mit mehreren Einfallswinkeln, Streuexperimente, Gasspektroskopie usw. werden alle durch die winkelabhängige Blauverschiebung begrenzt, die leicht 10% und mehr der zentralen Wellenlänge erreichen kann.

Die Fig. 2 zeigt links oben einen besonders einfachen Aufbau eines herkömmlichen dielektrischen Filters 30 mit einer Metall-Dielektrikum-Metall (M-D-M)-Stapelanordnung 18, bei der zwei dünne Metallfilme (je 35 nm) eine transparente dielektrische Schicht (hier: SiO₂, 140 nm) umhüllen. Während komplexere Filterdesigns ebenfalls weit verbreitet sind, z.B. der Ersatz metallischer durch dielektrische Spiegelschichtstrukturen, bleibt das Funktionsprinzip gleich. Die Spiegelschichtstrukturen 20, 22, die die dielektrische Zwischenschichtstruktur 24 umhüllen, bilden einen optischen Resonator 26 bzw. Hohlraum, was wiederum zu konstruktiver Interferenz bei der gewünschten Wellenlänge führt, die der Dicke d der dielektrischen Zwischenschichtstruktur entspricht, vergleiche Gleichung (1) aus der Beschreibungseinleitung. Dies führt zu einer schmalbandigen Linie des durchgelassenen Lichtes bei dieser Wellenlänge, wobei die Transmission im Vergleich zu den bloßen Spiegelschichtstrukturen 20, 22 wesentlich verbessert ist. Die Resonanzbedingung ändert sich beim Kippen des Filters 10, der Impulsvektor k̅ nimmt eine zusätzliche Komponente in der Ebene auf: $\vec{k} = {\vec{k}}_{⊥} + {\vec{k}}_{∥}$ was wiederum zu einer Winkelstreuung führt $λ \left(k\right) = 2 π / \sqrt{{\vec{k}}_{⊥}^{2} + {\vec{k}}_{∥}^{2} .}$

Wie k̅_{∥} vom Einfallswinkel abhängt, kann die Streuung auch beschrieben werden als λ(θ) wie in Gl. (2) oben.

Die Fig. 2 zeigt links in der Mitte, also in Darstellung (b), die Winkelverschiebung beim Kippen unter Verwendung einer Transfer-Matrix-Simulation der Filterübertragung. Dabei ist nicht nur eine signifikante Blauverschiebung der Wellenlänge, bei der Licht durchgelassen wird, zu beobachten, sondern die Linie teilt sich auch in zwei Polarisationszustände auf. Dieser Effekt wird durch die Fresnel-Gleichungen für Reflexion und Transmission erklärt, die von der Polarisation bei Einfallswinkeln ungleich Null abhängig sind. Eine solche grundlegende Filtervorrichtung weist wiederum eine Wellenlängenverschiebung von ≈ 50nm für p-polarisiertes und >100nm für s-polarisiertes Licht. Der Effekt ist noch deutlicher zu erkennen, wenn man das Transmissionsspektrum für verschiedene Einfallswinkel betrachtet, wie in Fig. 2 links unten, also Darstellung (c), dargestellt.

Bislang ist die einzige Möglichkeit, große Wellenlängenverschiebungen zu umgehen, die Verwendung dielektrischer Zwischenschichtstrukturen 24 mit hohem Brechungsindex, da die beobachtete Blauverschiebung bei Materialien mit hohem Brechungsindex (n) vermindert wird, vergleiche Gleichung (2). Dennoch beträgt selbst bei einem Brechungsindex von 3 die entsprechende Verschiebung bei 30° immer noch 2% der zentralen Wellenlänge (etwa 11 nm für das gezeigte Filter 10). Darüber hinaus sind solche Materialien mit hohem Brechungsindex, z.B. III-V-Halbleiter, schwieriger zu verarbeiten, was höhere Herstellungskosten mit sich bringt, und viele zeigen eine starke optische Absorption über wesentliche Teile des optischen Spektrums.

Andere bekannte Filterstrukturen mit reduzierter Winkelabhängigkeit basieren auf plasmonischen Nanostrukturen, weisen aber bisher nur eine begrenzte und reduzierte Leistung und hohe Verluste auf. Zu den Alternativen gehören Kombinationen von Absorptionsfiltern, obwohl ein echter Schmalbandbetrieb mit geringen Absorptionsverlusten in den meisten Fällen nicht erreicht werden kann. Darüber hinaus sind Absorptionsfilter oft größer und sperriger, wenn hohe Sperrraten (d.h. starke Absorption außerhalb der Übertragungsleitung) erforderlich sind.

Bei dem als Polaritonfilter 28 ausgebildeten Interferenzfilter 10 ist der M-D-M-Entwurf des dielektrischen Filters 30 durch den Austausch des Dielektrikums durch eine "stark koppelnde" Schichtstruktur modifiziert, siehe Fig. 2 rechts (Darstellungen (d) - (f). Im Gegenzug wird eine schmalbandige Übertragung durch eine optische Resonanz, hier eine hybridisierte Exziton-Polariton (oder einfach Polariton)-Mode, erreicht. Das resultierende Polaritonfilter 28 mit zwei 35nm-Metallspiegeln als Spiegelschichtstrukturen 20, 22 erreicht eine ähnlich hohe Transmission wie die konventionelle M-D-M Stapelanordnung 18. Allerdings ist die Abhängigkeit der transmittierten Wellenlänge vom Einfallswinkel drastisch reduziert, und zwar so weit, dass selbst eine Neigung von 89° (ein Winkel, der in der Praxis unrealistisch ist) zu einer spektralen Verschiebung der Hauptresonanz um nur 5 nm führt. Das als Polaritonfilter 28 ausgebildete Interferenzfilter 10 bietet den zusätzlichen Vorteil, dass die Übertragungsleitung schmalbandiger ist als beim Interferenzfilter 10, welches als dielektrisches Filter 28 ausgebildet ist. Dieses Verhalten basiert auf einer kohärenten Wechselwirkung von Licht- und Materie-Resonanzen.

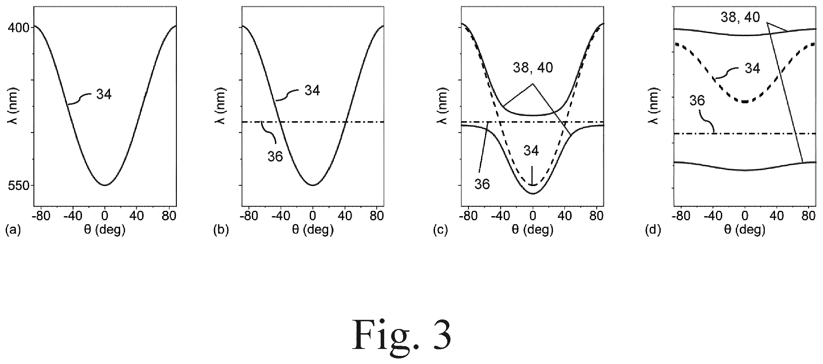

Fig. 3 gibt einen Überblick über die Gestalt von Transmissionsmoden bei einem Übergang von einem bloßen Resonator 26 bzw. Hohlraum zur gewünschten Struktur des Polaritonfilters 28 und hilft bei der Erläuterung des Funktionsprinzips. Sie zeigt eine Serie von mit den Moden korrespondierenden Bandstrukturen in einer jeweiligen Darstellung (a) - (d), bei der die Wellenlänge λ über dem Winkel θ aufgetragen ist und die die entsprechende Winkeldispersion verdeutlicht. Ein bloßer Resonator 18 bzw. Hohlraum, z.B. ein dielektrisches Filter 30 vom M-D-M-Typ, wird durch dessen optische Resonanz beschrieben, was sich aus den eingangs erwähnten Gleichungen (1) und (2) ergibt und in der Darstellung (a) gezeigt ist. Ersetzt man nun die nicht wechselwirkende dielektrische Zwischenschichtstruktur 32 eines dielektrischen Filters 30 durch eine optisch aktive Zwischenschichtstruktur 24, die eine Materialresonanz (hier: Exziton) im gewünschten Spektralbereich zeigt, kann man entweder eine schwache Kopplung (Darstellung (b)) oder eine starke Kopplung (Darstellungen (c) und (d) von Licht und Materie der Zwischenschichtstruktur 24 erreichen. Im Bereich der schwachen Kopplung wirkt die Hohlraummode 34 als optisches Hintergrundsystem, das die Transmission oder Emission des Filters 10 beeinflusst, jedoch ohne Einfluss auf die Hohlraummode 34 oder die Exzitonenmode 36, und es findet kein energetischer Austausch zwischen den beiden Moden 34, 36 statt. Dieses Prinzip liegt z.B. bei konventionellen Laserresonatoren und resonatorverstärkten Bauelementen zugrunde. Bei der in der Darstellung (c) gezeigten starken Kopplung (SC: strong coupling) gibt es stattdessen eine kohärente Wechselwirkung zwischen Kavitätsphoton und Materialexziton, wobei das eine in das andere umgewandelt wird. Dieser Prozess erfordert eine Wechselwirkungsstärke, die stärker ist als die Verlustmechanismen sowohl für das Kavitäts- bzw. Resonatorphoton (Emission, parasitäre Absorption, Streuung) als auch für das Exziton (nicht-strahlende Rekombination). Im Gegenzug wird die Wechselwirkung zwischen den beiden zum dominierenden Prozess innerhalb des Hohlraums/Resonators 26 und ihre energetische Degeneration wird aufgehoben. Ähnlich wie in gekoppelten Resonatoren oder Molekülorbitalen hybridisieren die Photonen- und Exzitonenresonanzen und zeigen eine energetische Aufspaltung in eine bindende (unteres Polariton, niedrigere Energien) Polaritonmode, die einer ersten Transmissionsmode 38 entspricht, und eine anti-bindende (oberes Polariton, höhere Energien) Polaritonmode, die einer zweiten Transmissionsmode 40 entspricht. Diese energetische Aufspaltung ΔE (Rabi-Aufspaltung) verändert die Dispersion eines SC-basierten Bauelements, insbesondere Polaritonfilters 28, stark und wechselt von einem mehr photonischen (dispersiv, kleine Winkel) zu einem mehr exzitonischen (nicht-dispersiv, große Winkel) Verhalten für das untere Polariton (umgekehrt für das obere Polariton). Dieses Verhalten kann durch ein gekoppeltes Oszillatormodell beschrieben werden, das Photonen- und Exzitonenresonanzen kombiniert, was die Grundlage für die Berechnungen hinter den Darstellungen der Fig. 3 (c) und (d) ist.

Der Prozess der starken Licht-Materie-Kopplung eröffnet nun die Möglichkeit, die Gerätedispersion durch Polaritonmoden abzustimmen und erlaubt einen weiteren Freiheitsgrad bei der Steuerung der Kopplungsstärke. Durch eine starke Erhöhung der Wechselwirkung, z.B. durch Erhöhung der Anzahl der wechselwirkenden Moleküle oder Verbesserung der optischen Qualität des Resonators 26, kann die Dispersion stärker verzerrt werden und bringt das System in das ultrastarke Kopplungsregime, definiert durch eine Kopplungsstärke von mindestens 10% gegenüber der Energie der bloßen Resonanz. Die Darstellung (d) der Fig. 3 zeigt ein System in diesem ultrastarken Kopplungsregime und zusätzlich mit einer positiven optischen Verstimmung der Hohlraummode 34 (d.h. Verschiebung zu höheren Energien). Im Vergleich zu den anderen in Fig. 3 gezeigten Szenarien zeigt dieses System eine sehr flache Dispersion sowohl der unteren Polaritonmode (erste Transmissionsmode 38) als auch der oberen Polaritonmode (zweiten Transmissionsmode 40). Wie oben gezeigt, geht dies nicht mit einem Verlust der optischen Qualität des Systems einher. Im Gegenteil, Polaritonmoden zeigen normalerweise schmalere Peaks als die ihnen zugrunde liegenden optischen Resonanzen. Die reduzierte Winkelabhängigkeit wird zusätzlich durch einen hohen effektiven Brechungsindex unterstützt, der aufgrund der Kramers-Kronig-Konsistenz mit starken Resonanzen einhergeht.

Es ist wichtig zu beachten, dass sich dieses Verhalten grundlegend von einer einfachen Kombination aus einem herkömmlichen schmalbandigen Dielektrikum und einem breitbandigen absorbierenden Filter unterscheidet. Dies liegt daran, dass nur die kohärente Wechselwirkung zwischen Photonen und Exzitonen zu einer Reorganisation der Moden 34, 36 führt. Während ein gut ausgewählter Absorptionsfilter die spektral verschobene Transmission konventioneller Filter bei hohen Winkeln bis zu einem gewissen Grad unterdrücken kann, geht dieses Licht dann verloren und steht für eine weitere Verwendung nicht mehr zur Verfügung. Mit dem Design des Polaritonfilters 28 erreichen wir stattdessen eine tatsächliche Veränderung der Lichtstreuung und damit eine hohe Lichtausbeute, die wiederum neue Einsatzmöglichkeiten und eine flexible Anwendung bietet.

Die Bildung von Polaritonen durch starke Licht-Materie-Kopplung ist ein bekanntes Phänomen und wird in der akademischen Forschung in lichtemittierenden Geräten wie Polariton-Lasern und lichtemittierenden Dioden, in lichtnehmenden Geräten wie Fotodioden und in elektronischen Geräten wie Transistoren ausgenutzt. In all diesen Fällen ist die Transmission von Licht durch ein stark gekoppeltes Bauelement jedoch nicht im Detail untersucht worden, und Transmissions- oder Reflexionskarten werden nur zum Nachweis der starken Kopplung verwendet. Eine Anwendung der Dispersion von Polaritonen zur Realisierung von optischen Filtern mit verbesserter Winkelstabilität wurde bisher weder vorgeschlagen noch demonstriert. Die aktuelle Forschung konzentriert sich stattdessen auf die Wirkung von Licht auf die Eigenschaften des Materials innerhalb des Hohlraums/Resonators 26, und es wurde festgestellt, dass eine starke Kopplung zu Änderungen des Absorptionsverhaltens führen, den Ladungstransport verbessern oder das chemische Verhalten beeinflussen kann.

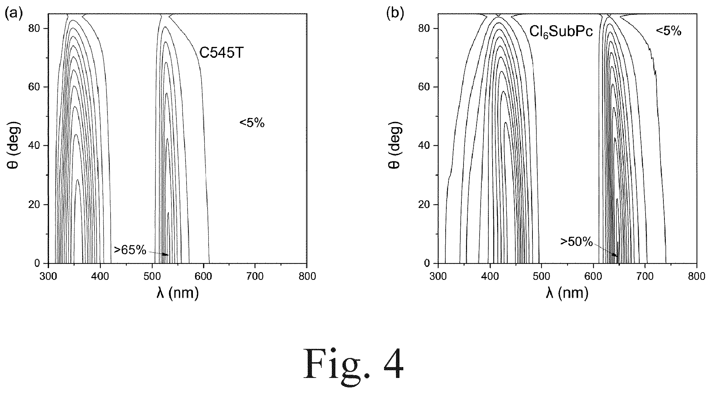

Fig. 4 zeigt gemessene winkel- und wellenlängenaufgelöste Transmissionsplots von als Polaritonfilter 28 ausgebildeten Interferenzfiltern 10, bestehend aus zwei 25nm-Ag-Spiegelschichtstrukturen 20, 22 und einer SC-Zwischenschicht 24 aus 80nm-Cumarin 545T (a) oder 80nm-Cl₆SubPc (b). Die Transmission ist in Prozent (%) angegeben, wobei "Höhenlinien" den Verlauf zwischen den direkt angezeigten Extremwerten anzeigen. Für beide Materialien wurde eine starke Kopplung nachgewiesen. Das gemessene Verhalten stimmt gut mit der vorhergesagten Leistung überein und das Transmissionsspektrum zeigt nur eine sehr geringe Änderung mit dem Winkel θ. Es wird erwartet, dass weitere Verbesserungen der Konstruktions- und Herstellungsbedingungen die Durchlässigkeit über das bereits nachgewiesene Maß hinaus steigern werden.

Da das zugrundeliegende Funktionsprinzip nicht auf ein bestimmtes Material, eine Materialklasse oder einen Spektralbereich beschränkt ist, kann es in breiter Weise eingesetzt werden. Das flexible chemische Design organischer Materialien erlaubt es, Filter 28 zu realisieren, die bei praktisch jeder Wellenlänge im nahen UV- bis nahen IR-Bereich des Spektrums arbeiten, wobei anorganische Materialien Möglichkeiten für andere Bereiche des elektromagnetischen Spektrums eröffnen.

Bislang war die Winkelstreuung von Interferenzfiltern 10 eine grundlegende Eigenschaft dieser Filter und daher beim Design optischer Geräte immer eine Einschränkung, wobei die Ingenieure im Allgemeinen nicht einmal die Frage in Betracht gezogen haben, was getan werden könnte, wenn Filter eine winkelunabhängige Transmission aufweisen.

Ein wirklich schmalbandiges und winkelunabhängiges Filterdesign wird eine Vielzahl neuer Anwendungen ermöglichen und wesentliche Verbesserungen und Vereinfachungen bestehender Anwendungen bieten. Wie bereits beschrieben, sind frühere Designs nicht in der Lage, den demonstrierten Betrieb bei hohen Winkeln zu erreichen, selbst wenn teure Materialien mit hohem Index verwendet werden. Die winkelunabhängige Transmission ist wichtig bei Anwendungen, die auf mehreren oder unbekannten Einfallswinkeln beruhen, wie z.B. Streuung oder Gasspektroskopie, Fluoreszenzspektroskopie, Fokussierung mit hoher numerischer Apertur. Darüber hinaus ermöglichen sie eine flexiblere Gestaltung von optischen Aufbauten und Geräten. Geformte und gekrümmte optische Elemente wie Linsen und Spiegel könnten direkt mit dem Polaritonfilter beschichtet werden, um eine breite Palette spektroskopischer Geräte zu ermöglichen.

Voraussichtlich wird ein solches Konzept besonders wichtig für miniaturisierte optische Elemente sein wird, bei denen Licht oft nicht richtig kollimiert werden kann. Da die Polaritonfilter 28 eine Dicke in der Größenordnung von einigen hundert Nanometern haben, lassen sie sich leicht in miniaturisierte Designs implementieren und können mit anderen Komponenten, z.B. Mikrolinsen, kombiniert werden, ohne dass die Leistung beeinträchtigt wird. Auf diese Weise lassen sich linsenlose Kameras für die Fluoreszenzbildgebung realisieren. Eine Anordnung von Polaritonfiltern 28 kann Lab-on-Chip-Miniaturspektroskopie ermöglichen, wo Streuung und Fluoreszenz vorherrschend sein können.

Darüber hinaus hat die Anmelderin kürzlich optische Geräte an ultraflexiblen Membranen demonstriert. Die Übertragung der Erfindung des Polaritonfilters 28 auf solche Membranen würde "Filterfolien" mit einer Dicke ergeben, die mit der in der (Lebensmittelverpackung) verwendeten Frischhaltefolie vergleichbar ist. Da der Polaritonfilter eine vernachlässigbare Winkelabhängigkeit aufweist, könnte ein solcher Film direkt auf oder in eine Vielzahl optischer Systeme beliebiger Geometrie integriert werden, ohne dass eine ebene Oberfläche beibehalten werden muss. Beispielsweise könnten Folien direkt und reversibel auf Linsen und Objektive aufgebracht werden.

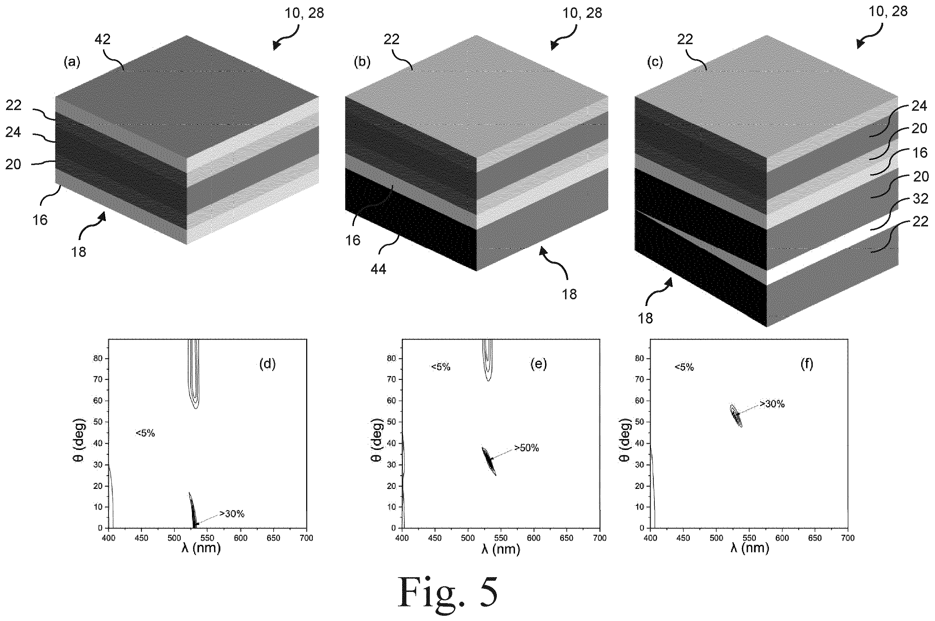

Fig. 5 zeigt mehrere Varianten des vorgeschlagenen Designs, insbesondere Kombinationen von Polaritonfiltern 28 und konventionellen Filtern. Wie bereits ausführlich dargelegt, ist das Funktionsprinzip von Polaritonfiltern 28 nicht auf eine bestimmte Spiegelkonstruktion oder ein bestimmtes Material beschränkt.

Einige organische Materialien sind empfindlich gegenüber Sauerstoff und Feuchtigkeit, insbesondere wenn sie gleichzeitig optischer Strahlung ausgesetzt sind. Daher kann bei der Verwendung organischer Materialien eine zusätzliche Schutz- oder Verkapselungsschicht nützlich sein, wie in der Darstellung (a) der Fig. 5 gezeigt, um die organischen Schichten abzuschirmen. Es ergibt sich die folgende Stapelanordnung 18 von Schichtstrukturen: Substrat 16, Spiegelschichtstruktur 20, Zwischenschichtstruktur 24, Spiegelschichtstruktur 22 und Deckschichtstruktur 38. Während sich dies bei aktiven Bauelementen (z.B. Solarzellen und Leuchtdioden) als äußerst wichtig und herausfordernd erwiesen hat, ist die Sauerstoff- und Feuchtigkeitsempfindlichkeit bei einem elektrisch passiven Design wie dem hier vorgeschlagenen Filter 10 ein geringeres Problem, wodurch die Anforderungen an den Schutz erheblich gelockert werden. Die Art der Polaritonbildung bedeutet, dass in jedem Fall zwei Polaritonmoden und entsprechend zwei Transmissionsmoden 38, 40 erzeugt werden. Auch wenn die beiden Moden energetisch voneinander separiert sind, kann dies dennoch unerwünscht sein und kann durch die Verwendung eines zusätzlichen (konventionellen) Filters, wie in der Darstellung (b) der Fig. 5 gezeigt, behoben werden. Hier ergibt sich die folgende Stapelanordnung 18 von Schichtstrukturen: Spiegelschichtstruktur 22, Zwischenschichtstruktur 24, Spiegelschichtstruktur 20, Substrat 16, weitere Spiegelschichtstruktur 40.

Die Kombination der starken Dispersion herkömmlicher dielektrischer Filter 30 mit der nahezu vollständigen Abwesenheit von Dispersion in dem Polaritonfilter 28 ermöglicht weitere, komplexere Anwendungen, wie in Darstellung (c) der Fig. 5 gezeigt. Hier ergibt sich die folgende Stapelanordnung 18 von Schichtstrukturen: Spiegelschichtstruktur 22, Zwischenschichtstruktur 24, Spiegelschichtstruktur 20, Substrat 16, Spiegelschichtstruktur 20, Zwischenschichtstruktur 32, und Spiegelschichtstruktur 22.

Insbesondere kann man Kombinationen aus konventionellen Filtern und Polaritonfiltern 28 konstruieren, die eine sehr winkelselektive Transmission aufweisen und Licht nur in dem Einfallswinkel durchlassen, in dem sich die Dispersion des konventionellen und des Polaritonfilters überlappen, wie die Darstellungen (d)-(f) der Fig. 5 zeigen. Die Wellenlänge und der Winkel, bei dem dies geschieht, können durch Anpassung von Design und Materialwahl frei abgestimmt werden. Die winkelselektive Transmission eines Filters wurde bereits früher durch die Kombination verschiedener konventioneller Filter nachgewiesen, wenn auch mit geringerer Leistung.

### Bezugszeichen

- 10: Interferenzfilter
- 12: Pfeil (einfallendes Licht)
- 14: Pfeil (transmittiertes, energieselektiv gefiltertes Licht)
- 16: Substrat
- 18: Stapelanordnung
- 20: Spiegelschichtstruktur (teildurchlässig)
- 22: Spiegelschichtstruktur (teildurchlässig)
- 24: Zwischenschichtstruktur (mit Materialresonanz)
- 26: Resonator
- 28: Polaritonfilter
- 30: dielektrisches Filter
- 32: Zwischenschichtstruktur (ohne Materialresonanz)
- 34: Hohlraummode (oder Resonatormode)
- 36: Exzitonenmode
- 38: erste Polaritonmode (bindend)
- 40: zweite Polaritonmode (anti-bindend)
- 42: Deckschichtstruktur
- 44: weitere Spiegelschichtstruktur
- d: Abstand
- ΔE: Größe der Rabi-Aufspaltung
- E_{M}: Energie der koppelnden Materialresonanz
- E_{G}: fester Grenzwert der Energie
- λ_{A}: Absorptionswellenlänge
- λ_{R}: Resonatorwellenlänge
- T(λ): Transmissionsgrad

## Patentansprüche

1. Interferenzfilter (10) zur wellenlängenselektiven Filterung von Licht, mit einer Stapelanordnung (18) von Schichtstrukturen (16, 20, 22, 24, 32, 42, 44), die zwei teildurchlässige Spiegelschichtstrukturen (20, 22) und eine zwischen den beiden teildurchlässigen Spiegelschichtstrukturen (20, 22) angeordnete Zwischenschichtstruktur (24, 32) aufweist,
wobei die beiden teildurchlässigen Spiegelschichtstrukturen (20, 22) und die Zwischenschichtstruktur (24, 32) einen optischen Resonator (26) mit einer charakteristischen Resonatorwellenlänge λ_{R} bilden,
wobei die Zwischenschichtstruktur (24) eine derartige exzitonische Materialresonanz bei einer Absorptionswellenlänge λ_{A} aufweist, dass bei Bestrahlung des Interferenzfilters (10) mit Licht der wellenlängenabhängige Transmissionsgrad T(λ) der Stapelanordnung in einem die Absorptionswellenlänge λ_{A} umgebenden Wellenlängenbereich von einer starken Kopplung der im Resonator (26) befindlichen Photonen des Lichts mit Exzitonen dieser Materialresonanz bestimmt wird,
wobei ein Abstand der Spiegelschichtstrukturen (20, 22) zueinander und ein Brechungsindex der Zwischenschichtstruktur (24, 32) derart ausgeführt ist, dass die daraus resultierende Resonatorwellenlänge λ_{R} in Bezug auf die Absorptionswellenlänge λ_{A} derart ist, dass sich bei Bestrahlung des Interferenzfilters (10) mit Licht zwei voneinander energetisch beabstandete Transmissionsmoden (38, 40) ergeben,
wobei zumindest eine der Transmissionsmoden (38, 40) einen vom Lichteinfallswinkels θ abhängigen Verlauf zeigt, in der Form, dass bei Änderung des Lichteinfallswinkels θ vom Lotrechten Lichteinfall θ = 0° weg, eine Änderung der Transmissionswellenlänge λ_{T} zu niedrigeren Wellenlängen hin erfolgt,
**dadurch gekennzeichnet, dass**
die Änderung der Transmissionswellenlänge λ_{T} bezogen auf den Wert bei lotrechten Lichteinfall θ = 0° bei einem Lichteinfallswinkel von θ = 45° weniger als 2% und bei einem Lichteinfallswinkel von θ = 80° weniger als 5% beträgt,
der Interferenzfilter (10) einen Transmissionsgrad T(λ) von mindestens 0,05 bei zumindest einer der Transmissionswellenlängen λ_{T} der Transmissionsmoden (38, 40) bei lotrechtem Lichteinfall aufweist

2. Interferenzfilter (10) nach Anspruch 1, **dadurch gekennzeichnet, dass** die Resonatorwellenlänge λ_{R} bei lotrechtem Lichteinfall höchstens so groß ist, wie die Absorptionswellenlänge λ_{A}, also dass λ_{R} ≤ λ_{A} gilt.

3. Interferenzfilter (10) nach Anspruch 1 oder 2, **dadurch gekennzeichnet, dass** sich durch die starke Kopplung der im Resonator (26) bei Bestrahlung des Interferenzfilters (10) mit Licht befindlichen Photonen des Lichts mit der exzitonischen Materialresonanz eine Rabi-Splitting genannte energetische Aufspaltung der Transmissionsmoden (38, 40) ergibt, wobei eine Größe ΔE der energetischen Aufspaltung der Rabi-Splitting einen kleineren Wert der beiden im folgenden genannten Werte übertrifft:
- 5% einer Energie E_{M} der koppelnden exzitonischen Materialresonanz
oder
- einen festen Grenzwert E_{G} von E_{G} = 100 meV.

4. Interferenzfilter (10) nach einem der Ansprüche 1 bis 3, **dadurch gekennzeichnet, dass** zumindest eine der Transmissionsmoden (38, 40) einen Qualitätsfaktor Q von Q > 8 aufweist.

5. Interferenzfilter (10) nach einem der Ansprüche 1 bis 4, **dadurch gekennzeichnet, dass** das Material der Zwischenschichtstruktur (24) ein organisches Material ist.

6. Interferenzfilter (10) nach einem der Ansprüche 1 bis 5, **dadurch gekennzeichnet, dass** der Interferenzfilter (10) ein Interferenzfilter (10) zur Filterung von Licht aus mindestens einem der folgenden Spektralbereiche ist:
- UV-Bereich,
- VIS-Bereich,
- NIR-Bereich,
- IR-Bereich und
- THz-Bereich.

7. Verwendung einer Stapelanordnung (18) von Schichtstrukturen (16, 20, 22, 24, 32, 42, 44) als Interferenzfilter (10), wobei die Stapelanordnung (18) von Schichtstrukturen (16, 20, 22, 24, 32, 42, 44) zwei teildurchlässige Spiegelschichtstrukturen (20, 22) und eine zwischen den beiden teildurchlässigen Spiegelschichtstrukturen (20, 22) angeordnete Zwischenschichtstruktur (24, 32) aufweist,
wobei die beiden teildurchlässigen Spiegelschichtstrukturen (20, 22) und die Zwischenschichtstruktur (24, 32) einen optischen Resonator (26) mit einer charakteristischen Resonatorwellenlänge λ_{R} bilden,
wobei die Zwischenschichtstruktur (24) eine derartige exzitonische Materialresonanz bei einer Absorptionswellenlänge λ_{A} aufweist, dass bei Bestrahlung des Interferenzfilters (10) mit Licht der wellenlängenabhängige Transmissionsgrad T(λ) der Stapelanordnung in einem die Absorptionswellenlänge λ_{A} umgebenden Wellenlängenbereich von einer starken Kopplung der im Resonator (26) befindlichen Photonen des Lichts mit Exzitonen dieser Materialresonanz bestimmt wird,
wobei ein Abstand der Spiegelschichtstrukturen (20, 22) zueinander und ein Brechungsindex der Zwischenschichtstruktur (24, 32) derart ausgeführt ist, dass die daraus resultierende Resonatorwellenlänge λ_{R} in Bezug auf die Absorptionswellenlänge λ_{A} derart ist, dass sich bei Bestrahlung des Interferenzfilters (10) mit Licht zwei voneinander energetisch beabstandete Transmissionsmoden (38, 40) ergeben,
wobei zumindest eine der Transmissionsmoden (38, 40) einen vom Lichteinfallswinkels θ abhängigen Verlauf zeigt, in der Form, dass bei Änderung des Lichteinfallswinkels θ vom Lotrechten Lichteinfall θ = 0° weg, eine Änderung der Transmissionswellenlänge λ_{T} zu niedrigeren Wellenlängen hin erfolgt,
**dadurch gekennzeichnet, dass**
die Änderung der Transmissionswellenlänge λ_{T} bezogen auf den Wert bei lotrechten Lichteinfall θ = 0° bei einem Lichteinfallswinkel von θ = 45° weniger als 2% und bei einem Lichteinfallswinkel von θ = 80° weniger als 5% beträgt,
der Interferenzfilter (10) einen Transmissionsgrad T(λ) von mindestens 0,05 bei zumindest einer der Transmissionswellenlängen λ_{T} der Transmissionsmoden (38, 40) bei lotrechtem Lichteinfall aufweist.

## Claims

1. Interference filter (10) for wavelength-selective filtering of light, comprising a stack arrangement (18) of layer structures (16, 20, 22, 24, 32, 42, 44), which include two partially permeable mirror layer structures (20, 22) and an intermediate layer structure (24, 32) arranged between the two partially permeable mirror layer structures (20, 22),
wherein the two partially permeable mirror layer structures (20, 22) and the intermediate layer structure (24, 32) form an optical resonator (26) having a characteristic resonator wavelength λ_{R},
wherein the intermediate layer structure (24) has such an excitonic material resonance at an absorption wavelength λ_{A} that, upon irradiation of the interference filter (10) with light, the wavelength-dependent transmittance T(λ) of the stack arrangement in a wavelength range surrounding the absorption wavelength λ_{A} is determined by a strong coupling of the photons of the light located in the resonator (26) with excitons of this material resonance,
wherein a spacing of the mirror layer structures (20, 22) relative to one another and a refractive index of the intermediate layer structure (24, 32) are designed such that the resulting resonator wavelength λR is, with respect to the absorption wavelength λA, such that, upon irradiation of the interference filter (10) with light, two transmission modes (38, 40) energetically spaced from one another result,
wherein at least one of the transmission modes (38, 40) exhibits a profile dependent on the angle of incidence θ of the light, in such a way that, upon a change of the angle of incidence θ away from perpendicular incidence of light θ = 0°, a change of the transmission wavelength λT towards lower wavelengths occurs,
**characterized in that**
the change of the transmission wavelength λT relative to the value at perpendicular incidence of light θ = 0° is less than 2% at an angle of incidence of θ = 45° and less than 5% at an angle of incidence of θ = 80°,
the interference filter (10) has a transmittance T(λ) of at least 0.05 at at least one of the transmission wavelengths λT of the transmission modes (38, 40) at perpendicular incidence of light.

2. Interference filter (10) according to claim 1, **characterized in that** the resonator wavelength λ_{R} at perpendicular incidence of light is at most as large as the absorption wavelength λ_{A}, i.e. that λ_{R} ≤ λ_{A} applies.

3. Interference filter (10) according to claim 1 or 2, **characterized in that** due to the strong coupling of the photons of the light located in the resonator (26) upon irradiation of the interference filter (10) with light with the excitonic material resonance, an energetic splitting of the transmission modes (38, 40), called Rabi splitting, results, wherein a magnitude ΔE of the energetic splitting of the Rabi splitting exceeds the smaller of the two values mentioned below:
5% of an energy E_{M} of the coupling excitonic material resonance; or
the fixed limit value E_{G} of E_{G} = 100 meV.

4. Interference filter (10) according to any one of claims 1 to 3, **characterized in that** at least one of the transmission modes (38, 40) has a quality factor Q of Q > 8.

5. Interference filter (10) according to any one of claims 1 to 4, **characterized in that** the material of the intermediate layer structure (24) is an organic material.

6. Interference filter (10) according to any one of claims 1 to 5, **characterized in that** the interference filter (10) is an interference filter (10) for filtering light from at least one of the following spectral ranges:
UV range;
VIS range;
NIR range;
IR range; and
THz range.

7. Use of a stack arrangement (18) of layer structures (16, 20, 22, 24, 32, 42, 44) as an interference filter (10), wherein the stack arrangement (18) of layer structures (16, 20, 22, 24, 32, 42, 44) comprises two partially permeable mirror layer structures (20, 22) and an intermediate layer structure (24, 32) arranged between the two partially permeable mirror layer structures (20, 22),
wherein the two partially permeable mirror layer structures (20, 22) and the intermediate layer structure (24, 32) form an optical resonator (26) having a characteristic resonator wavelength λR,
wherein the intermediate layer structure (24) has such an excitonic material resonance at an absorption wavelength λA that, upon irradiation of the interference filter (10) with light, the wavelength-dependent transmittance T(λ) of the stack arrangement in a wavelength range surrounding the absorption wavelength λA is determined by a strong coupling of the photons of the light located in the resonator (26) with excitons of this material resonance,
wherein a spacing of the mirror layer structures (20, 22) relative to one another and a refractive index of the intermediate layer structure (24, 32) are designed such that the resulting resonator wavelength λR is, with respect to the absorption wavelength λA, such that, upon irradiation of the interference filter (10) with light, two transmission modes (38, 40) energetically spaced from one another result,
wherein at least one of the transmission modes (38, 40) exhibits a profile dependent on the angle of incidence θ of the light, in such a way that, upon a change of the angle of incidence θ away from perpendicular incidence of light θ
= 0°, a change of the transmission wavelength λT towards lower wavelengths occurs,
**characterized in that**
the change of the transmission wavelength λT relative to the value at perpendicular incidence of light θ = 0° is less than 2% at an angle of incidence of θ = 45° and less than 5% at an angle of incidence of θ = 80°,
the interference filter (10) has a transmittance T(λ) of at least 0.05 at at least one of the transmission wavelengths λT of the transmission modes (38, 40) at perpendicular incidence of light.

## Revendications

1. Filtre interférentiel (10) destiné au filtrage sélectif en longueur d'onde de la lumière, comprenant un empilement (18) de structures de couches (16, 20, 22, 24, 32, 42, 44), qui présente deux structures de couches de miroir partiellement transmissives (20, 22) et une structure de couches intermédiaire (24, 32) disposée entre les deux structures de couches de miroir partiellement transmissives (20, 22),
dans lequel les deux structures de couches de miroir partiellement transmissives (20, 22) et la structure de couches intermédiaire (24, 32) forment un résonateur optique (26) ayant une longueur d'onde de résonateur caractéristique λ_{R},
dans lequel la structure de couches intermédiaire (24) présente une résonance de matériau excitonique à une longueur d'onde d'absorption λ_{A} telle que, lors de l'irradiation du filtre interférentiel (10) par de la lumière, le taux de transmission T(λ) de l'empilement, dépendant de la longueur d'onde, dans une plage de longueurs d'onde entourant la longueur d'onde d'absorption λ_{A}, est déterminé par un couplage fort des photons de la lumière présents dans le résonateur (26) avec des excitons de cette résonance de matériau,
dans lequel une distance entre les structures de couches de miroir (20, 22) et un indice de réfraction de la structure de couches intermédiaire (24, 32) sont réalisés de telle sorte que la longueur d'onde de résonateur λ_{R} qui en résulte est telle, par rapport à la longueur d'onde d'absorption λ_{A}, que, lors de l'irradiation du filtre interférentiel (10) par de la lumière, deux modes de transmission (38, 40) énergétiquement espacés l'un de l'autre sont obtenus,
dans lequel au moins l'un des modes de transmission (38, 40) présente une évolution dépendant de l'angle d'incidence de la lumière θ, de telle sorte que, lorsque l'angle d'incidence de la lumière θ s'écarte de l'incidence normale de la lumière θ = 0°, une variation de la longueur d'onde de transmission λ_{T} vers des longueurs d'onde plus faibles se produit,
**caractérisé en ce que**
la variation de la longueur d'onde de transmission λ_{T}, rapportée à la valeur à l'incidence normale de la lumière θ = 0°, est inférieure à 2 % pour un angle d'incidence de la lumière θ = 45° et inférieure à 5 % pour un angle d'incidence de la lumière θ = 80°,
le filtre interférentiel (10) présente un taux de transmission T(λ) d'au moins 0,05 à au moins l'une des longueurs d'onde de transmission λ_{T} des modes de transmission (38, 40) à l'incidence normale de la lumière.

2. Filtre interférentiel (10) selon la revendication 1, **caractérisé en ce que** la longueur d'onde de résonateur λ_{R} à incidence normale de la lumière est au plus aussi grande que la longueur d'onde d'absorption λ_{A}, c'est-à-dire que λ_{R} ≤ λ_{A}.

3. Filtre interférentiel (10) selon la revendication 1 ou 2, **caractérisé en ce que** le couplage fort des photons de la lumière présents dans le résonateur (26), lors de l'irradiation du filtre interférentiel (10) par de la lumière, avec la résonance de matériau excitonique, produit une séparation énergétique des modes de transmission (38, 40), appelée dédoublement de Rabi, dans lequel une grandeur ΔE de la séparation énergétique du dédoublement de Rabi dépasse une plus petite des deux valeurs mentionnées ci-après :
- 5 % d'une énergie E_{M} de la résonance de matériau excitonique couplée, ou
- une valeur limite fixe E_{G} de E_{G} = 100 meV.

4. Filtre interférentiel (10) selon l'une des revendications 1 à 3, **caractérisé en ce qu'**au moins l'un des modes de transmission (38, 40) présente un facteur de qualité Q de Q > 8.

5. Filtre interférentiel (10) selon l'une des revendications 1 à 4, **caractérisé en ce que** le matériau de la structure de couches intermédiaire (24) est un matériau organique.

6. Filtre interférentiel (10) selon l'une des revendications 1 à 5, **caractérisé en ce que** le filtre interférentiel (10) est un filtre interférentiel (10) destiné au filtrage de lumière provenant d'au moins l'une des plages spectrales suivantes :
- plage UV,
- plage VIS,
- plage NIR,
- plage IR et
- plage THz.

7. Utilisation d'un empilement (18) de structures de couches (16, 20, 22, 24, 32, 42, 44) en tant que filtre interférentiel (10), dans laquelle l'empilement (18) de structures de couches (16, 20, 22, 24, 32, 42, 44) présente deux structures de couches de miroir partiellement transmissives (20, 22) et une structure de couches intermédiaire (24, 32) disposée entre les deux structures de couches de miroir partiellement transmissives (20, 22),
dans laquelle les deux structures de couches de miroir partiellement transmissives (20, 22) et la structure de couches intermédiaire (24, 32) forment un résonateur optique (26) ayant une longueur d'onde de résonateur caractéristique λ_{R},
dans laquelle la structure de couches intermédiaire (24) présente une résonance de matériau excitonique à une longueur d'onde d'absorption λ_{A} telle que, lors de l'irradiation du filtre interférentiel (10) par de la lumière, le taux de transmission T(λ) de l'empilement, dépendant de la longueur d'onde, dans une plage de longueurs d'onde entourant la longueur d'onde d'absorption λ_{A}, est déterminé par un couplage fort des photons de la lumière présents dans le résonateur (26) avec des excitons de cette résonance de matériau,
dans laquelle une distance entre les structures de couches de miroir (20, 22) et un indice de réfraction de la structure de couches intermédiaire (24, 32) sont réalisés de telle sorte que la longueur d'onde de résonateur λ_{R} qui en résulte est telle, par rapport à la longueur d'onde d'absorption λ_{A}, que, lors de l'irradiation du filtre interférentiel (10) par de la lumière, deux modes de transmission (38, 40) énergétiquement espacés l'un de l'autre sont obtenus,
dans laquelle au moins l'un des modes de transmission (38, 40) présente une évolution dépendant de l'angle d'incidence de la lumière θ, de telle sorte que, lorsque l'angle d'incidence de la lumière θ s'écarte de l'incidence normale de la lumière θ = 0°, une variation de la longueur d'onde de transmission λ_{T} vers des longueurs d'onde plus faibles se produit,
**caractérisée en ce que**
la variation de la longueur d'onde de transmission λ_{T}, rapportée à la valeur à l'incidence normale de la lumière θ = 0°, est inférieure à 2 % pour un angle d'incidence de la lumière θ = 45° et inférieure à 5 % pour un angle d'incidence de la lumière θ = 80°,
le filtre interférentiel (10) présente un taux de transmission T(λ) d'au moins 0,05 à au moins l'une des longueurs d'onde de transmission λ_{T} des modes de transmission (38, 40) à l'incidence normale de la lumière.
